# EUROPÄISCHE PATENTSCHRIFT

(11) **EP 3 502 677 B1**
(45) Veröffentlichungstag und Bekanntmachung des Hinweises auf die Patenterteilung: **25.01.2023**
(21) Anmeldenummer: 18213519.4
(22) Anmeldetag: 18.12.2018
(51) Int. Cl.: G01N 23/207, G01N 23/223, G21K 1/02

(54) **AUFBAU UND VERFAHREN ZUR ORTSAUFGELÖSTEN MESSUNG MIT EINEM WELLENLÄNGENDISPERSIVEN RÖNTGENSPEKTROMETER**
STRUCTURE AND METHOD FOR SPATIALLY RESOLVED MEASUREMENT WITH A WAVELENGTH-DISPERSIVE X-RAY SPECTROMETER
CONSTRUCTION ET PROCÉDÉ DE MESURE PAR RÉSOLUTION LOCALE AU MOYEN D'UN SPECTROMÈTRE À RAYONS X À DISPERSION DES LONGUEURS D'ONDE

(30) Priorität: 19.12.2017 DE 102017223228
(43) Veröffentlichungstag der Anmeldung: 26.06.2019
(73) Patentinhaber: Bruker AXS GmbH, 76187 Karlsruhe (DE)
(72) Erfinder: Filsinger, Frank, 76137 Karlsruhe (DE); Metka, Uwe, 76646 Bruchsal (DE)
(74) Vertreter: Kohler Schmid Möbus Patentanwälte

(56) Entgegenhaltungen:
- EP-A1- 3 246 696
- DE-B3-102010 062 192
- US-A1- 2011 268 251

## Beschreibung

Die Erfindung betrifft ein Röntgen-Spektrometer mit einer Röntgen-Quelle, von der Röntgen-Strahlung auf eine zu untersuchende Probe geführt wird, die eine Oberfläche aufweist, auf welche die Röntgen-Strahlung aus der Röntgen-Quelle auftrifft, mit einer Blenden-Anordnung, durch welche an der Oberfläche der Probe gebeugte oder gestreute oder von der Probe emittierte Röntgen-Strahlung hindurchtreten kann, mit einer Kollimator-Anordnung, die eine Vielzahl von zueinander parallelen Lamellen aufweist, mit einer Analysator-Anordnung, an welcher ein Teil der durch die Kollimator-Anordnung gelangten Röntgen-Strahlung unter Einhaltung der Bragg-Bedingung reflektiert wird, sowie mit einer Detektor-Anordnung zum Empfang und Nachweis von an der Analysator-Anordnung reflektierter Röntgen-Strahlung.

Eine solche Anordnung ist bekannt aus der EP 0 623 817 B1 (=Referenz [1]).

### Hintergrund der Erfindung

Die vorliegende Erfindung betrifft allgemein den Bereich der Röntgen-Spektrometrie und dabei insbesondere die Röntgenfluoreszenz-Spektrometrie. Die Anwendbarkeit der Erfindung ist jedoch nicht auf dieses Gebiet beschränkt. Insbesondere betrifft die Erfindung eine speziell modifizierte Soller-Blenden-Anordnung.

Die elementare Zusammensetzung einer Probe kann mit einem wellenlängendispersiven Röntgenspektrometer gemessen werden. Im Allgemeinen wird in wellenlängendispersiven Röntgenspektrometern die über die gesamte Probe gemittelte Zusammensetzung bestimmt. Für spezielle Anwendungen ist jedoch auch die räumliche Verteilung der einzelnen Elemente in der Probe relevant. Da die über die Proben gemittelte Messung kürzere Messzeiten erlaubt, kann ein Spektrometer idealerweise zwischen einem Messmodus mit räumlicher Auflösung und einem Messmodus zur Bestimmung der gemittelten Zusammensetzung hin- und herschalten.

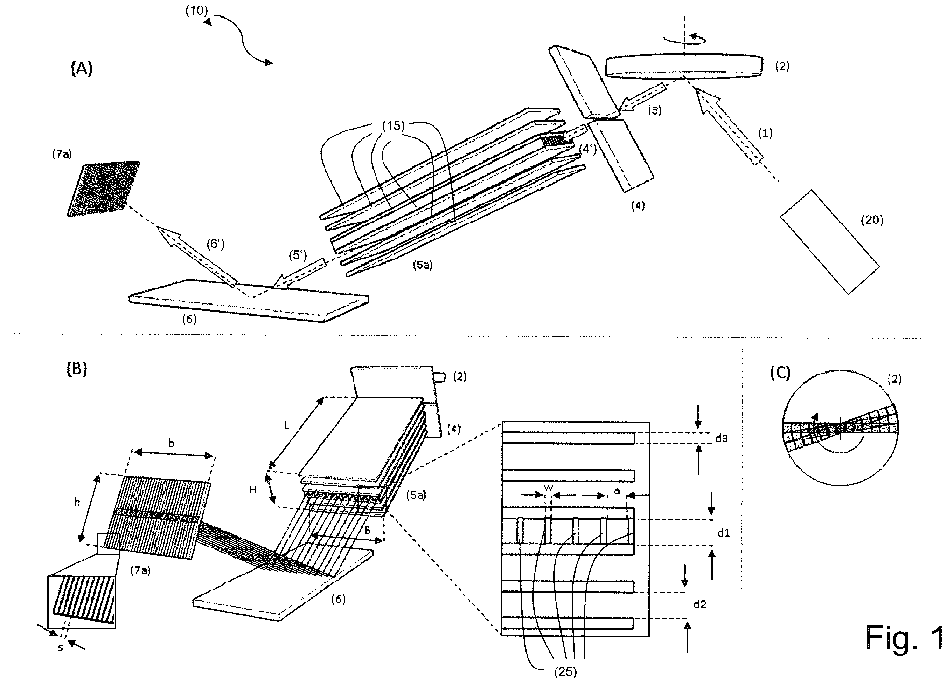

Im Stand der Technik gibt es dazu zwei herkömmliche Lösungsansätze:
Der erste Ansatz ist in der eingangs zitierten Referenz [1] dargestellt, von der die vorliegende Erfindung ausgeht (siehe insbesondere dortige Abb. 1). Hier wird der herkömmliche Strahlengang eines wellenlängendispersiven Röntgenspektrometers (Abb.1 links) um eine kleine bewegliche Blende zwischen der Probe und einem Primärsollerspalt erweitert. Diese Blende schränkt das Sichtfeld des Detektors (der selbst keine Ortsauflösung besitzt) ein, so dass nur Röntgenstrahlung aus einem kleinen Bereich der Probe (z.B. einem Kreis mit Durchmesser von 1mm) detektiert wird. Durch ein Verschieben der Blende parallel zu den Lamellen des Primärsollerspaltes wird die Probe entlang einer Linie durch ihren Mittelpunkt abgetastet. Um die komplette Probe räumlich zu vermessen wird die Probe anschließend schrittweise um ihren Mittelpunkt weiter rotiert, bis die gesamte Probenoberfläche vermessen ist. Soll ohne räumliche Auflösung gemessen werden, wird eine große Blende verwendet, die Strahlung von der gesamten Probenoberfläche auf den Detektor fallen lässt. Der Nachteil dieses Ansatzes ist die sehr lange Messdauer für das Messen mit räumlicher Auflösung, da die Blende schrittweise zu verschieben ist und die Probe hier Punkt für Punkt vermessen wird.

Der Einsatz von herkömmlichen Soller-Anordnungen in der Röntgen-Spektrometrie ist etwa in den Referenzen [4] und [5] beschrieben.

Der zweite Ansatz ist in den Referenzen [2] und [3] dargestellt. Anstelle der Sollerspalte aus dem oben geschilderten ersten Ansatz werden hier gerade Polykapillaren eingesetzt. Diese schränken die Divergenz der von der Probe emittierten Röntgenstrahlung sowohl in der Beugungsebene (wie beim herkömmlichen Sollerspalt) als auch senkrecht dazu ein. Somit ist der Ort, an dem die Röntgenstrahlung auf den Detektor trifft, mit dem Ort der Röntgenemission auf der Probe korreliert. Wird nun anstelle eines nicht ortsauflösenden Detektors, wie er im ersten Ansatz zum Einsatz kommt, ein Detektor mit einer zweidimensionalen Ortsauflösung eingesetzt, so kann ein zweidimensionales Bild der Probenoberfläche erzeugt werden.

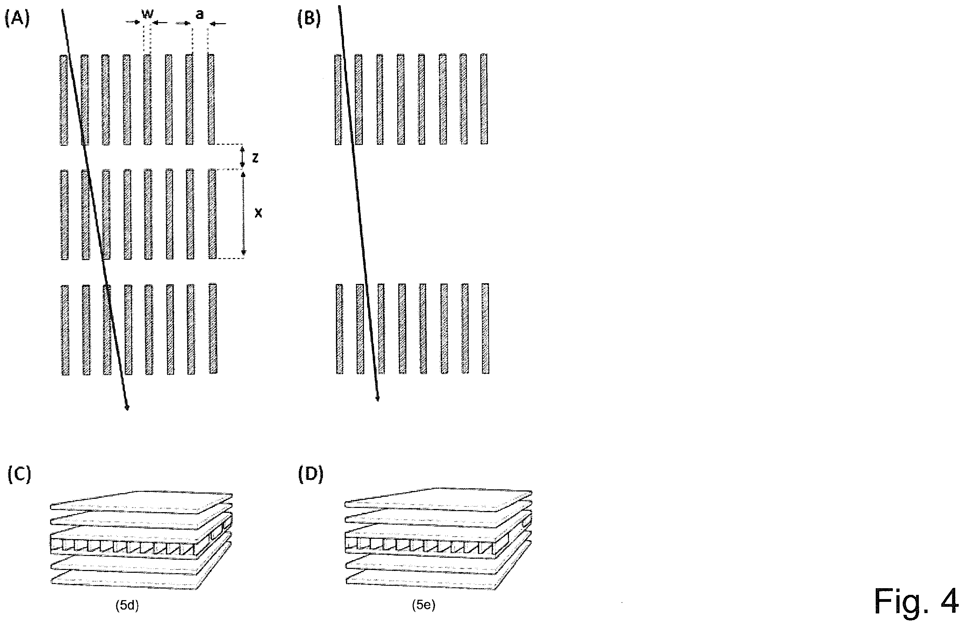

Beim diesem zweiten Ansatz ergeben sich folgende Nachteile:
Polykapillaren als Lichtleiter beruhen auf dem Prinzip der Totalreflektion an den Innenwänden der Kapillaren. Der kritische Winkel für die Totalreflektion, welcher die Ortsauflösung des Ansatzes bestimmt, ist umgekehrt proportional zur Energie der Röntgenstrahlung (siehe Referenz [2]). Daher ist für jedes in einer gegebenen Probe zu messende Element die Ortsauflösung eine andere, wie es auch in Abb. 4 in Referenz [2] dargestellt ist. Wünschenswert wäre jedoch eine elementunabhängige Ortsauflösung.

Zwar kann mit dem Aufbau auch die über die gesamte Probe integrierte Intensität gemessen werden, indem man über alle Pixel des 2D-Detektors summiert. Allerdings ist die Effizienz im Vergleich zu einem Instrument mit herkömmlichen Sollerspalten sehr viel geringer. Die Winkelakzeptanz der Polykapillaren ist senkrecht zur Beugungsebene sehr viel kleiner als die eines Sollerspaltes (typischerweise mehr als eine Größenordnung), was zu einer sehr viel längeren Messzeit führt. Außerdem sind Polykapillaren relativ teuer.

Dokument US 2011/268251 A1 (HE BOB BAOPING [US]) 3. November 2011 (2011-11-03) offenbart ein Röntgen-Spektrometer nach dem Oberbegriff des Anspruchs 1. H

### Aufgabe der Erfindung

Der vorliegenden Erfindung liegt demgegenüber die Aufgabe zugrunde, mit einfachen technischen Maßnahmen und ohne größeren Kostenaufwand ein Röntgen-Spektrometer der eingangs definierten Art bereitzustellen, mit welchem im Vergleich zum Stand der Technik deutlich schnellere ortsaufgelöste Messungen durchgeführt werden können.

### Kurze Beschreibung der Erfindung

Diese Aufgabe wird durch die vorliegende Erfindung auf ebenso überraschend einfache wie wirkungsvolle Weise durch ein Röntgen-Spektrometer gemäß Anspruch 1 gelöst, welches u.a. dadurch bestimmt ist, dass die Blenden-Anordnung eine schlitzförmige Blende umfasst und im Strahlengang des Röntgen-Spektrometers vor oder hinter der Kollimator-Anordnung positioniert ist; dass die Kollimator-Anordnung eine modifizierte Soller-Blende umfasst, bei welcher Lamellen eine Vielzahl von schlitzförmigen Durchgängen bilden, wobei aber zumindest bei einem Teil der von den Lamellen gebildeten Schlitzen im Wesentlichen senkrecht zu den Schlitzen ausgerichtete Trennwände vorhanden sind, die für Röntgen-Strahlung undurchlässig sind und die Querdivergenz der durch die Kollimator-Anordnung hindurchtretenden Röntgen-Strahlung in einer Richtung quer zur Beugungsebene der von der Probe kommenden Röntgen-Strahlung einschränken; und dass die Detektor-Anordnung mindestens einen in einer Dimension ortsauflösenden Detektor enthält.

Erfindungsgemäß wird also eine verbesserte Röntgenanalyseapparatur vorgeschlagen, bei welcher eine modifizierte Form einer Soller-Blende zum Einsatz gelangt, welche die oben beschriebenen Merkmale aufweist. Die Ausrichtung des länglichen Schlitzes der schlitzförmigen Blende ist parallel zu den von den Lamellen gebildeten Schlitzen. Als der ortsauflösende

Detektor kann ein solcher mit 1dimensionaler Orstsauflösung eingesetzt werden.

Die erfindungsgemäße Modifizierung des Strahlengangs nach der Probe sieht im Einzelnen wie folgt aus:
Eine Schlitzblende, ein modifizierter Sollerspalt und ein Detektor mit 1D - Ortsauflösung ermöglichen zusammen mit einer Probenrotation eine effiziente Messung der räumlichen Verteilung der Elemente in der Probe.

Die Schlitzblende blockiert einen Teil der von der Probe emittierten Röntgenstrahlung, so dass nur Röntgenstrahlung aus einem schmalen Streifen auf der Probenoberfläche in den modifizierten Sollerspalt eintreten kann. Die Mitte dieses Streifens liegt hierbei genau auf dem Mittelpunkt der Probe. Zwischen den beiden zentralen Lamellen des Sollerspaltes, in die die Röntgenstrahlung eintritt, sind Trennwände vorhanden, die die Querdivergenz der Strahlung (senkrecht zur Beugungsebene) einschränken. Somit wird ein definierter Ort auf der Probe auf einen definierten Ort auf dem Detektor abgebildet.

Zur Detektion der Strahlung wird ein Detektor verwendet, der in (mindestens) einer Raumrichtung eine Ortsauflösung besitzt (hier speziell ein Streifendetektor). Die Streifen des Detektors sind senkrecht zu den Lamellen der Soller-Blende angeordnet. So kann der komplette sichtbare Streifen auf der Probe simultan ortsaufgelöst vermessen werden. Rotiert man die Probe weiter, kann Schritt für Schritt die gesamte Probe vermessen werden. Zum Umschalten auf den "normalen Messmodus" (in einem dann jedoch nicht mehr erfindungsgemäßen Spektrometer) entfernt man die Schlitzblende und integriert die Intensität über alle Streifen des Detektors.

Folgende Vorteile ergeben sich gegenüber den beiden oben beschriebenen Ansätzen 1 und 2 des Standes der Technik:
- Im Vergleich zu Ansatz 1 verkürzt sich so die Messzeit für das Abtasten einer rotierbaren runden Probe um einen Faktor, der dem Verhältnis von halbem Probendurchmesser zur gewünschten maximalen Schrittgröße (am Rand der Probe) entspricht. Bei einem typischen Probenradius von 15mm und einer Ortsauflösung von 1mm ergibt sich so z.B. ein Faktor 15.
- Im Vergleich zu Ansatz 2 ist die Ortsauflösung unabhängig von der Energie der Röntgenstrahlung, da der modifizierte Sollerspalt nicht auf Totalreflektion beruht, sondern die zu unterdrückende Strahlung einfach absorbiert.
- Im Vergleich zu Ansatz 2 lässt sich mit deutlich höherer Effizienz in den normalen Messmodus umschalten, bei dem nur die über die Probe integrierte Intensität relevant ist. Durch einfaches Entfernen der Schlitzblende -was noch im Detail weiter unten beschrieben wird- erreicht man (in einem dann jedoch nicht mehr erfindungsgemäßen Spektrometer) fast dieselbe Effizienz wie für die Messung mit einer herkömmlichen Soller-Blende, da die Querdivergenz nur zwischen den zentralen beiden Lamellen der Soller-Blende eingeschränkt ist. Eine typische Soller-Blende besteht aber aus 40 bis 100 Lamellen, so dass lediglich Intensitätseinbußen von 1 bis 2% zu erwarten sind.

Bevorzugte Ausführungsformen und Weiterbildungen der Erfindung

Besonders bevorzugt ist eine Ausführungsform des erfindungsgemäßen Röntgen-Spektrometers, bei der die Probe um eine Achse senkrecht zu ihrer Oberfläche rotierbar im Röntgen-Spektrometer gelagert ist. Dies ermöglicht die schnelle, räumlich aufgelöste Messung der Element-zusammensetzung der Probe. Durch schrittweises Drehen der Probe und Messen der von der Probe ausgehenden Röntgenstrahlung kann die gesamte Probenoberfläche erfasst werden.

Weitere vorteilhafte Ausführungsformen sind dadurch gekennzeichnet, dass der mindestens in einer Dimension ortsauflösende Detektor der Detektor-Anordnung als Streifen-Detektor ausgeführt ist, und dass die Streifen des mindestens einen Streifen-Detektors senkrecht zu den Schlitzen der modifizierten Soller-Blende ausgerichtet sind. Dies ist die optimale Ausrichtung des Detektors, welche die beste räumliche Auflösung ermöglicht.

Eine weitere vorteilhafte Ausführungsform sieht vor, dass die Blenden-Anordnung derart im Röntgen-Spektrometer mechanisch eingebaut ist, dass die Blenden-Anordnung für eine räumlich aufgelöste Abtast-Messung der Probe vor oder hinter der Kollimator-Anordnung positionierbar und für eine integrierende Messung aus dem Strahlengang des (dann jedoch nicht mehr erfindungsgemäßen) Röntgen-Spektrometers entfernbar ist.

Dies ermöglicht in einem Gerät sowohl eine schnelle gemittelte Elementanalyse der gesamten Probe als auch die ortsaufgelöste Elementanalyse. Dabei kann die Blenden-Anordnung auch so gestaltet sein, dass sie bei Bedarf fest einsetzbar oder (in einem dann jedoch nicht mehr erfindungsgemäßen Spektrometer) komplett herausnehmbar ist.

Eine bevorzugte Ausführungsform ist dadurch gekennzeichnet, dass in der modifizierten Soller-Blende der Kollimator-Anordnung Trennwände lediglich zwischen dem von zwei benachbarten Lamellen gebildeten Schlitz, welcher dem Schlitz der Blenden-Anordnung gegenüberliegt, vorhanden sind. Damit wird die Performance bei der Durchführung von Messungen zur gemittelten Elementanalyse (d.h. bei Umschalten auf den Modus ohne Ortsauflösung) am wenigsten beeinträchtigt, da nur wenige Trennwände die durch die Kollimator-Anordnung transmittierte Röntgen-Strahlung abschwächen.

Eine Klasse von besonders bevorzugten Ausführungsformen des erfindungsgemäßen Röntgen-Spektrometers zeichnet sich dadurch aus, dass in der modifizierten Soller-Blende der Kollimator-Anordnung Trennwände lediglich in den beiden Schlitzen der drei mittleren benachbarten Lamellen vorhanden sind, wobei die mittlere dieser drei Lamellen der Mitte des des Schlitzes der Blenden-Anordnung gegenüberliegt. Diese Anordnung erhöht die erreichbare Auflösung bei den ortsaufgelösten Messungen, da sich auch im zentralen Teil der Probe das Sichtfeld des Detektors bei einer Rotation der Probe ändert.

Alternativ sind bei einer anderen Klasse von vorteilhaften Ausführungsformen in der modifizierten Soller-Blende der Kollimator-Anordnung Trennwände zwischen allen der von benachbarten Lamellen gebildeten Schlitzen vorhanden. Damit wird eine ortsaufgelöste Messung der gesamten Probenoberfläche ermöglicht. Hier ist insbesondere ein in 2 Dimensionen ortsauflösender Detektor vorteilhaft.

Eine weitere vorteilhafte Ausführungsform des erfindungsgemäßen Röntgen-Spektrometers zeichnet sich dadurch aus, dass die Detektor-Anordnung einen in einer Dimension ortsauflösenden, segmentierten Streifen-Detektor oder zwei direkt übereinander angeordnete, jeweils in einer Dimension ortsauflösende Streifen-Detektoren enthält. Diese Anordnung erhöht die Geschwindigkeit der ortsaufgelösten Messung im Vergleich zu einem Detektor mit durchgehenden Streifen beträchtlich.

Vorteilhaft ist auch eine Ausführungsform, bei der die schlitzförmige Blende der Blenden-Anordnung senkrecht zum lokalen Strahlengang sowie senkrecht zu ihrer Schlitzrichtung kontinuierlich oder stufenweise bewegbar gelagert ist. Bei dieser Ausführung wird die ortsaufgelöste Messung durch eine geeignete Verschiebung der Blendenanordnung erreicht. Außerdem ist die Schrittweite beim Abtasten, d.h. die räumliche Auflösung bei der Messung, für alle Punkte auf der Probe gleich, da sich die Blendenanordnung mit jedem Messschritt einen Schlitz der modifizierten Soller-Blende weiterbewegt.

Besonders bevorzugt sind auch Ausführungsformen der Erfindung, bei denen die Probe in der Ebene ihrer Oberfläche kreisförmig ist und im Strahlengang des Röntgen-Spektrometers zwischen der Probe und der schlitzförmigen Blende der Blenden-Anordnung oder zwischen der schlitzförmigen Blende der Blenden-Anordnung und der modifizierten Soller-Blende der Kollimator-Anordnung eine feste weitere Blende, insbesondere mit elliptischem Blendendurchlass, positioniert ist, welche das Sichtfeld der Detektor-Anordnung so einschränkt, dass nur die Probe selbst abgebildet wird. Dies reduziert das Untergrundsignal vom Probenhalter, der möglicherweise ebenfalls von der Röntgenquelle ausgehendes Röntgenlicht reflektiert oder durch die Röntgenquelle angeregt wird und selbst Röntgenfluoreszenzstrahlung emittiert.

Weitere Ausführungsformen des erfindungsgemäßen Röntgenspektrometers zeichnen sich dadurch aus, dass die Abstände der Lamellen so gewählt sind, dass die Divergenz des Röntgen-Strahls nach der Kollimator-Anordnung in Beugungsrichtung im zentralen Abschnitt der modifizierten Soller-Blende gleich ist wie in der restlichen Kollimator-Anordnung. Dies sorgt dafür, dass sich die spektrale Auflösung beim Umschalten von der Messung mit Ortsauflösung in den integrierenden Modus nicht ändert.

Von großem technischen Nutzen ist auch eine Klasse von Ausführungsformen, bei welchen zumindest ein Teil der Trennwände der modifizierten Soller-Blende der Kollimator-Anordnung in Richtung des lokalen Strahlengangs segmentiert aufgebaut ist. Damit werden Materialeinsparungen ermöglich. Außerdem kann dadurch auch die Herstellung der modifizierten Soller-Blende einfacher gestaltet werden, etwa durch den Einsatz von 3D-Druckverfahren.

Besonders bevorzugt sind Weiterbildungen dieser Ausführungsformen, die sich dadurch auszeichnen, dass die einzelnen Segmente der Trennwände jeweils eine Länge x sowie einen Abstand z zu den unmittelbar benachbarten Segmenten aufweisen, und dass das Verhältnis x/z so gewählt ist, dass keine Sichtlinie durch den jeweiligen Soller-Schlitz zwischen jeweils benachbarten von den Trennwänden gebildeten Röhren exisitiert. Dies stellt sicher, dass die räumliche Auflösung durch die Segmentierung nicht beeinträchtigt wird.

Bei einer weiteren Klasse von vorteilhaften Ausführungsformen sind die Lamellen und die Trennwände der modifizierten Soller-Blende mittels 3D-Druck des zentralen Abschnitts der Kollimator-Anordnung hergestellt, insbesondere aus Wolfram-haltigem Material. Dieses Herstellungsverfahren ermöglicht eine relativ freie Formgebung. Wolfram (oder ein anderes Element mit hoher Ordnungszahl) ist von Vorteil, damit die Röntgenstrahlung von den Trennwänden möglichst effektiv absorbiert wird.

Zusätzliche Vorteile bieten Weiterbildungen dieser Ausführungsformen, welche dadurch gekennzeichnet sind, dass die Querschnitte der von jeweils benachbarten Trennwänden und Lamellen gebildeten Röhren so gewählt sind, dass in der Projektion auf die Oberfläche der Probe ein symmetrischer Fleck sichtbar wird, insbesondere dass die Querschnitte elliptisch gewählt sind und der Fleck kreisförmig wird. Dies erleichtert die Auswertung der gemessenen ortsaufgelösten Bilder.

Die Größe des Detektors sollte vorzugsweise dem Strahlengang angepasst sein. Insbesondere sollte die empfindliche Fläche des mindestens einen in einer Dimension ortsauflösenden Streifen-Detektors der Detektor-Anordnung mindestens so groß gewählt werden, wie die gesamte geöffnete Querschnittsfläche der modifizierten Soller-Blende der Kollimator-Anordnung, wobei insbesondere gilt h ≥ H und b ≥ B, mit
h = Höhe der empfindlichen Fläche des Streifen-Detektors,
b = Breite der empfindlichen Fläche des Streifen-Detektors,
H = Höhe der Querschnittsfläche der modifizierten Soller-Blende,
B = Breite der Querschnittsfläche der modifizierten Soller-Blende.

Des Weiteren sollte der der Strahlengang so gewählt werden, dass die gesamte Probe abgebildet werden kann. Insbesondere sollte der Querschnitt der modifizierten Soller-Blende der Kollimator-Anordnung nach Form und Größe so gewählt werden, dass Röntgenstrahlung von der gesamten Oberfläche der Probe erfasst werden kann.

Außerdem sollte die Ortsauflösung des Detektors nicht gröber sein, als die gewünschte Ortsauflösung auf der Probe. Daher ist es von Vorteil, wenn die Streifenbreite s der Streifen des mindestens einen Streifen-Detektors kleiner ist als die gewünschte Ortsauflösung auf der Probe.

In den Rahmen der vorliegenden Erfindung fällt auch eine modifizierten Soller-Blende, bei der zumindest ein Teil der Trennwände in Richtung des lokalen Strahlengangs segmentiert aufgebaut ist.

Weitere Vorteile der Erfindung ergeben sich aus der Beschreibung und den Figuren der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in den Figuren der Zeichnung dargestellt und wird anhand von Ausführungsbeispielen näher erläutert.

Es zeigen:
- **Fig. 1**: eine schematische Darstellung einer ersten einfacheren Ausführungsform der Erfindung mit Trennwänden in nur einem Schlitz der modifizierten Soller-Blende:
**(A)** räumliche Schemaansicht von der Seite
**(B)** wie (A), aber mit Ansicht von schräg oben aus der Richtung der im Detailbild links partiell vergrößerten Detektor-Anordnung sowie rechts mit vergrößerter schematischer Schnittdarstellung senkrecht zu den Schlitzen modifizierten Soller-Blende
**(C)** schematisch angedeutete Rotation der Probe aus (A) mit durch die Schlitzblende erfasstem Probenbereich;
- **Fig. 2**: eine schematische Darstellung einer zweiten Ausführungsform mit Trennwänden nur in zwei benachbarten Schlitzen der modifizierten Soller-Blende sowie mit einer Detektor-Anordnung mit zwei voneinander getrennten Segmenten: **(A)** räumliche Schemaansicht von schräg oben aus der Richtung der im Detailbild links partiell vergrößerten Detektor-Anordnung sowie rechts mit vergrößerter schematischer Schnittdarstellung senkrecht zu den Schlitzen modifizierten Soller-Blende **(B)** schematisch angedeutete Rotation der Probe aus (A) mit durch die Schlitzblende erfasstem Probenbereich;
- **Fig. 3**: eine schematische Darstellung einer dritten Ausführungsform mit verschiebbarer Schlitzblende, Trennwänden in sämtlichen Schlitzen der modifizierten Soller-Blende sowie mit einer Detektor-Anordnung wie in Fig. 1:
**(A)** räumliche Schemaansicht von schräg oben aus der Richtung der Detektor-Anordnung
**(B)** Probe aus (A) mit schematisch angedeuteter Abtastung durch Verschiebung der Schlitzblende in Pfeilrichtung; und
- **Fig. 4**: eine schematische Darstellung einer Ausführungsform sowie einer so nicht funktionierenden Form mit segmentiert aufgebauten Trennwänden der modifizierten Soller-Blende:
(A) schematischer Horizontalschnitt durch die mittlere Schlitzebene mit in Strahlrichtung drei Trennwände-Segmenten, wodurch die als Pfeil angedeutete Sichtlinie blockiert ist
**(B)** schematischer Horizontalschnitt durch die mittlere Schlitzebene mit in Strahlrichtung zwei Trennwände-Segmenten, wodurch die als Pfeil angedeutete Sichtlinie nicht blockiert ist und die deshalb so nicht funktionieren würde
(C) schematische räumliche Darstellung der Ausführungsform nach (A)
**(D)** schematische räumliche Darstellung der Form nach (B).

Die vorliegende Erfindung geht aus von einem Röntgen-Spektrometer 10 mit einer Röntgen-Quelle 20, von der Röntgen-Strahlung 1 auf eine zu untersuchende Probe 2 geführt wird, die eine Oberfläche aufweist, auf welche die Röntgen-Strahlung 1 aus der Röntgen-Quelle 20 auftrifft, mit einer Blenden-Anordnung 4, durch welche an der Oberfläche der Probe 2 gebeugte oder gestreute oder von der Probe 2 emittierte Röntgen-Strahlung 3 hindurchtreten kann, mit einer Kollimator-Anordnung 5a; 5b; 5c; 5d; 5e, die eine Vielzahl von zueinander parallelen Lamellen 15 aufweist, mit einer Analysator-Anordnung 6, an welcher ein Teil der durch die Kollimator-Anordnung 5a; 5b; 5c; 5d; 5e gelangten Röntgen-Strahlung 5' unter Einhaltung der Bragg-Bedingung reflektiert wird, sowie mit einer Detektor-Anordnung 7a; 7b zum Empfang und Nachweis von an der Analysator-Anordnung 6 reflektierter Röntgen-Strahlung 6'.

Diese Anordnung ist erfindungsgemäß weiter dadurch bestimmt, dass die Blenden-Anordnung 4 eine schlitzförmige Blende umfasst und im Strahlengang des Röntgen-Spektrometers vor oder hinter der Kollimator-Anordnung im Strahlengang des Röntgen-Spektrometers positioniert ist; dass die Kollimator-Anordnung 5a; 5b; 5c; 5d; 5e eine modifizierte Soller-Blende umfasst, bei welcher die Lamellen 15 eine Vielzahl von schlitzförmigen Durchgängen bilden, wobei aber zumindest bei einem Teil der von den Lamellen 15 gebildeten Schlitzen im Wesentlichen senkrecht zu den Schlitzen ausgerichtete Trennwände 25 vorhanden sind, die für Röntgen-Strahlung undurchlässig sind und die Querdivergenz der durch die Kollimator-Anordnung 5a; 5b; 5c; 5d; 5e hindurchtretenden Röntgen-Strahlung 5' in einer Richtung quer zur Beugungsebene der von der Probe 2 kommenden Röntgen-Strahlung 3 einschränken; und dass die Detektor-Anordnung 7a; 7b mindestens einen in einer Dimension ortsauflösenden Detektor enthält. Vorzugsweise ist dieser Detektor als Streifen-Detektor ausgebildet.

Wesentlich für die Umsetzung der Erfindung ist die Kombination aus Schlitzblende, modifizierter Soller-Blende und Detektor im Strahlengang, wobei der Detektor in mindestens einer räumlichen Dimension ortsauflösend ist, sowie bei einigen Ausführungsformen die Verwendung einer Probenrotation.

Die in den Figuren 1 bis 3 schematisch dargestellten Ausführungsformen der Erfindung zeigen im Detail drei besonders bevorzugte Varianten des erfindungsgemäßen Röntgen-Spektrometers:
**Fig. 1****:**
**(A)** Die von der Röntgenröhre 20 emittierte Strahlung 1 trifft die Probe 2. Die Röntgenstrahlung 3 tritt durch eine Schlitzblende 4 in eine Kollimator-Anordnung 5a mit modifizierter Soller-Blende ein und wird unter Einhaltung der Bragg-Bedingung am Analysatorkristall der Analysator-Anordnung 6 auf einen zumindest in einer Dimension ortsauflösenden Detektor 7a reflektiert.
**(B)** Die modifizierte Soller-Blende schränkt die Divergenz sowohl in der Beugungsebene (wie eine normale Soller-Blende) als auch senkrecht dazu ein. Letzteres ermöglicht die räumlich aufgelöste Abbildung des durch die Schlitzblende sichtbaren Streifens auf der Probe auf den Detektor.
**(C)** Durch eine schrittweise Rotation der Probe kann die gesamte Probe ortsaufgelöst vermessen werden.

### • Variante 1: Strahlengang wie in Fig. 1 gezeigt:

Die Anordnung erlaubt zusammen mit einem ortsauflösenden Detektor eine deutlich schnellere ortsaufgelöste Messung. (Vorteil gegenüber Ref.[1])

Nur eine Komponente muss für das Abtasten motorisiert werden, in der Regel durch Probenrotation. Die Blende bleibt während des Abtastens der Probe fest. (Vorteil gegenüber Ref.[1])

Die Ortsauflösung ist unabhängig von der Energie der Röntgenstrahlung, d.h. von dem zu messenden Element. (Vorteil gegenüber Ref.[2,3])

Der Aufbau erlaubt das effiziente Umschalten zwischen räumlich aufgelöster Messung und (in einem dann jedoch nicht mehr erfindungsgemäßen Spektrometer) integrierender Messung. Dazu muss lediglich die Schlitzblende aus dem Strahlengang entfernt werden, was im Allgemeinen ohne Probleme sogar manuell erfolgen kann, z.B. durch die Öffnung zur Probenzuführung. (Vorteil gegenüber Ref.[2,3])

Die modifizierte Soller-Blende ist einfacher und kostengünstiger herzustellen als Polykapillaren, z.B. durch 3D-Druck des zentralen Teils aus Wolfram. (Vorteil gegenüber Ref. [2,3])

Ein 1D-Detektor ist weniger komplex als ein 2D-Detektor und damit im Allgemeinen auch kostengünstiger. (Vorteil gegenüber Ref. [2,3])

### Vorteilhafte bzw. typische Ausführungsmerkmale des Aufbaus:

Die empfindliche Fläche des Detektors sollte (mindestens) so groß sein wie der Querschnitt der modifizierten Soller-Blende, also h ≥ H und b ≥ B (Maßangaben vgl. Fig. 1B).

Der Querschnitt der Soller-Blende wird im Allgemeinen so gewählt, dass Röntgenfluoreszenzstrahlung von der gesamten Probenoberfläche erfasst werden kann.

Die Streifenbreite s des Detektors, d.h. seine Ortsauflösung, sollte kleiner als die gewünschte Ortsauflösung auf der Probe sein.

### Typische Dimensionen in einem wellenlängendispersiven Röntgenspektrometer:

▪ Länge der Solleroptik entlang der Strahlachse L = 50-150mm
▪ Höhe der Solleroptik senkrecht zur Strahlachse, senkrecht zu den Sollerspalten H ≈ 20mm
▪ Breite der Solleroptik senkrecht zur Strahlachse, parallel zu den Sollerspalten B ≈ 30mm
▪ Abstand der Lamellen der Solleroptik im Randbereich d2 = 0,1-2mm
▪ Dicke der Lamellen im Randbereich d3 = 0,1 mm
▪ Streifenbreite des Detektors s = 0,05-0,15mm
▪ Dicke der Trennwände im Sollerspalt w = 0,1-0,2mm
▪ Abstand der Trennwände im Sollerspalt a = 0,5-1mm
▪ Abstand der Lamellen im Zentralbereich der Solleroptik, in dem Trennwände vorhanden sind: d1 = 0,5-1mm
▪ Höhe des XRF-Detektors h ≈ 20mm
▪ Breite des XRF-Detektors b ≈ 30mm

### Fig. 2:

**(A)** Die von der Probe 2 emittierte Röntgenstrahlung tritt durch eine Schlitzblende 4 in eine modifizierte Soller-Blende der Kollimator-Anordnung 5b ein und wird unter Einhaltung der Bragg-Bedingung am Analysatorkristall der Analysator-Anordnung 6 auf einen ortsauflösenden Detektor 7b reflektiert. Im Gegensatz zu Variante 1 besteht der Detektor aus zwei Segmenten und in der modifizierten Soller-Blende sind zwischen den zentralen drei Lamellen Trennwände zur Einschränkung der Querdivergenz angebracht. Die obere Reihe von "Röhren" bildet einen Streifen der Probe auf das untere Segment des Detektors ab, die untere Reihe von Röhren bildet gleichzeitig einen Streifen der Probe auf das obere Segment des Detektors ab.
**(B)** Durch eine schrittweise Rotation der Probe kann die gesamte Probe ortsaufgelöst vermessen werden.

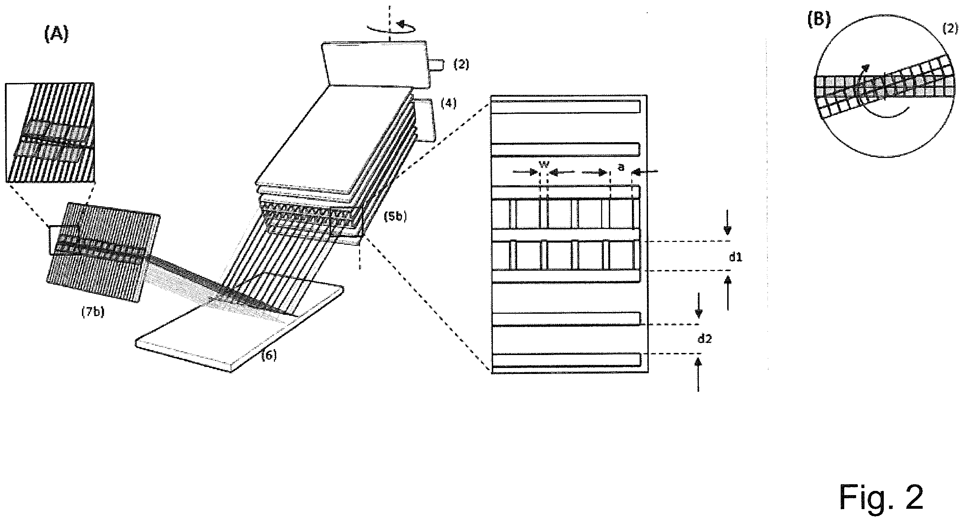

### • Variante 2: Strahlengang wie in Fig. 2 gezeigt:

Hier wird ein segmentierter 1D-Detektor (oder zwei direkt übereinander angeordnete 1D-Detektoren) verwendet sowie eine modifizierte Soller-Blende mit Trennwänden zwischen den mittleren drei Lamellen, so dass zwei übereinanderliegende Reihen von "Röhren" entstehen. Die obere Reihe der Röhren wird auf die eine Hälfte des segmentierten Detektors abgebildet, die untere Reihe der Röhren auf die andere Hälfte des segmentierten Detektors. Der Mittelpunkt der Probe liegt genau zwischen den zentralen vier "Röhren".

### Vorteile von Variante 2 gegenüber Variante 1:

∘ Die Geschwindigkeit für das Abtasten der Probe ist doppelt so hoch.
∘ Auch im zentralen Teil der Probe ändert sich das Sichtfeld des Detektors mit der Probenrotation. Damit erhält man zusätzliche Information durch Schrittweiten, die kleiner sind als die effektive räumliche Auflösung des Aufbaus.

### Fig. 3:

**(A)** Die von der Probe 2 emittierte Röntgenfluoreszenzstrahlung tritt durch eine Schlitzblende in einen modifizierten Sollerspalt der Kollimator-Anordnung 5c ein und wird unter Einhaltung der Bragg-Bedingung am Analysatorkristall der Analysator-Anordnung 6 auf einen ortsauflösenden Detektor 7a reflektiert. Im Gegensatz zu den Varianten 1 und 2 sind zwischen allen Lamellen der Soller-Blende Trennwände zur Einschränkung der Querdivergenz vorhanden. Die Probe muss während der Messung nicht rotiert werden. Stattdessen wird die Schlitzblende wie dargestellt bewegt, um die komplette Probe abzutasten.
**(B)** Durch eine Verschiebung der Schlitzblende kann die ganze Probe mit der gleichen Schrittweite ortsaufgelöst vermessen werden.

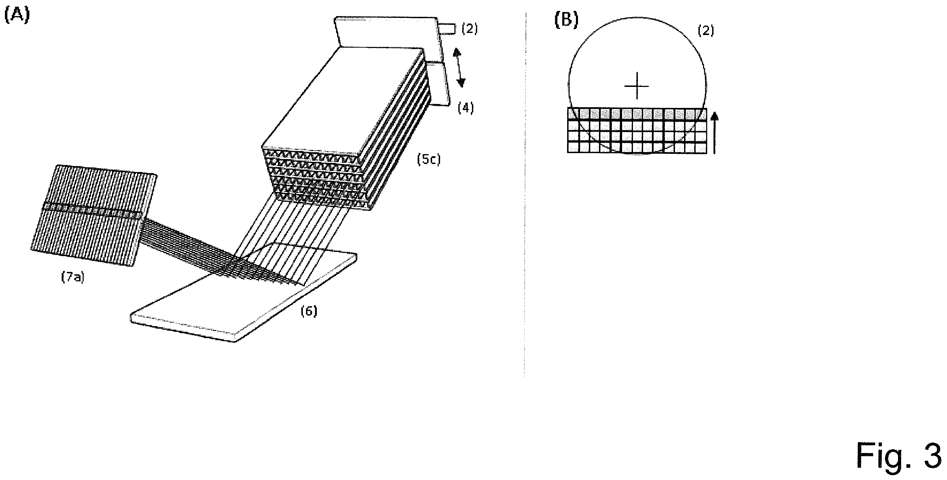

### • Variante 3: Strahlengang wie in Fig. 3 gezeigt

Anders als in der Ausführungsform nach Fig. 1 sind zwischen allen Lamellen der Soller-Blende Wände vorhanden, die die Querdivergenz einschränken. Die Probe rotiert nicht, stattdessen wird die Schlitzblende bewegt, um die Probe abzutasten.

### Vorteile von Variante 3 gegenüber den Varianten 1 und 2:

∘ Es wird eine um einen Faktor ~1,5 schnellere Messung ermöglicht.
∘ Die Schrittgröße ist gleich für alle Positionen auf der Probenoberfläche.
∘ Es wird kein Punkt der Probe mehrfach abgetastet

### Besonders vorteilhafte Ausführungsform der Variante 3:

Zwischen der Schlitzblende und der modifizierten Soller-Blende befindet sich eine feste (z.B. elliptische) Blende, die das Sichtfeld des Detektors so einschränkt, dass nur die Probe selbst abgebildet wird.

Vorteil: Das Hintergrundsignal vom Probenhalter wird unterdrückt, vor allem für Pixel, die den Probenrand schneiden.

### Vorteilhafte Weiterbildungen der Varianten 1 bis 3:

Alle Komponenten, insbesondere auch der Detektor, befinden sich im Vakuum.
∘ Vorteil: Auch leichte Elemente können gemessen werden. Die 2D-Detektoren in Ref. [2,3] befinden sich hinter einem Polymerfenster (siehe dortige Figur 2) außerhalb der Vakuumkammer des Spektrometers. Dies erschwert die Messung von leichten Elementen, da das Polymerfenster einen signifikanten Teil der Fluoreszenzstrahlung absorbiert.

Der Teil der modifizierten Soller-Blende, der Wände zur Einschränkung der Querdivergenz enthält (oder die komplette Soller-Blende), ist aus mehreren Segmenten zusammengesetzt, die einen Abstand z voneinander entlang der Strahlrichtung haben (siehe Fig. 4).

Der Abstand z und die Länge x der Segmente sind so gewählt, dass keine Sichtlinie durch die Soller-Blende zwischen jeweils zwei benachbarten "Röhren" existiert (siehe Fig. 4 (A)).

Die Konfiguration in Fig. 4 (B) würde in der Praxis nicht funktionieren, da ein Photon, das in eine Röhre eintritt, durch eine benachbarte Röhre austreten kann. Hier verliert man die Korrelation zwischen dem Ort der Emission auf der Probe und dem Ort der Detektion auf dem Detektor.

Für alle Ausführungsformen gemäß den Figuren 1 bis 3 ist es ist weiterhin vorteilhaft, die Probe nicht zu rotieren, sondern in einer Richtung senkrecht zum durch die Blenden-Anordnung 4 eingeschränkten Sichtfeld des Detektors auf der Probe zu translatieren. Hierdurch wird kein Punkt der Probe mehrfach abgetastet.

### Fig. 4:

Die Figur 4 zeigt einen horizontalen Schnitt durch den zentralen Teil der modifizierten Soller-Blende. In der hier dargestellten Version der Erfindung sind die Trennwände segmentiert ausgeführt. Wie oben dargelegt, würde die Variante nach Abbildung **(A)** funktionieren, die Variante nach Abbildung **(B)** hingegen nicht.

Abbildung **(C)** zeigt die in Abbildung (A) ausgeführte Variante zur Verdeutlichung in 3D Ansicht. Abbildung **(D)** zeigt die in (B) ausgeführte Variante in 3D Ansicht.
∘ Ein Vorteil dieser Ausführungsform ist die Materialeinsparung bei Anwendung von 3D-Druck.
∘ Ein weiterer Vorteil besteht in einer einfacheren Herstellung bei 3D-Druck. Nach dem Druck muss anschließend das Pulver entfernt werden, was umso einfacher ist je kürzer die Röhren sind.

Der Querschnitt der Röhren kann so gewählt werden (z.B. elliptisch), dass in der Projektion auf die Oberfläche ein symmetrischer Fleck sichtbar ist (z.B. kreisförmig).

Der Querschnitt der Röhren kann so gewählt werden, dass die Divergenz in Beugungsrichtung im zentralen Teil und im restlichen Teil der Soller-Blende gleich sind, d.h. die Maße d1 und d2 in den Figuren 1 und 2 sind identisch.
∘ Vorteil: Beim Umschalten zwischen integrierendem Modus und Messen mit räumlicher Auflösung wird die spektrale Linienbreite nicht verändert.

Es ist weiterhin vorteilhaft, wenn d1 > d2 gewählt wird, da dann bei spektral auflösender Messung mit eingebrachter Blenden-Anordnung 4 mehr Intensität von der Probenoberfläche aufgesammelt werden kann.

### Bezugszeichenliste

- 1: Röntgen-Strahlung aus einer Röntgen-Quelle
- 2: Probe
- 3: von der Probe emittierte Röntgen-Strahlung
- 4: Blenden-Anordnung
- 4': durch die Blenden-Anordnung hindurchgetretene Röntgen-Strahlung
- 5a; 5b; 5c; 5d; 5e 5`: Kollimator-Anordnung durch die Kollimator-Anordnung gelangte Röntgen-Strahlung
- 6: Analysator-Anordnung
- 6': an der Analysator-Anordnung eflektierte Röntgen-Strahlung
- 7a; 7b: Detektor-Anordnung
- 10: Röntgen-Spektrometer
- 15: Lamellen
- 20: Röntgen-Quelle
- 25: Trennwände

### Referenzliste

Für die Beurteilung der Patentfähigkeit in Betracht gezogene Publikationen:
[1] EP 0 623 817 B1
[2] Ohmori et al., Spectrochimica Acta Part B, 83-84 (2013), 56-60
[3] Tsuji et al., Spectrochimica Acta Part B, 113 (2015), 43-53
[4] DE 1 090 877 B
[5] DE 10 2008 060 070 B4; US 7,983,389 B2

## Patentansprüche

1. Röntgen-Spektrometer (10) mit einer Röntgen-Quelle (20), von der Röntgen-Strahlung (1) auf eine zu untersuchende Probe (2) geführt wird, die eine Oberfläche aufweist, auf welche die Röntgen-Strahlung (1) aus der Röntgen-Quelle (20) auftrifft, mit einer Blenden-Anordnung (4), durch welche an der Oberfläche der Probe (2) gebeugte oder gestreute oder von der Probe (2) emittierte Röntgen-Strahlung (3) hindurchtreten kann, mit einer Kollimator-Anordnung (5a; 5b; 5c; 5d; 5e), die eine Vielzahl von zueinander parallelen Lamellen (15) aufweist, mit einer Analysator-Anordnung (6), an welcher ein Teil der durch die Kollimator-Anordnung (5a; 5b; 5c; 5d; 5e) gelangten Röntgen-Strahlung (5') unter Einhaltung der Bragg-Bedingung reflektiert wird, sowie mit einer Detektor-Anordnung (7a; 7b) zum Empfang und Nachweis von an der Analysator-Anordnung (6) reflektierter Röntgen-Strahlung (6'), wobei die Blenden-Anordnung (4) eine schlitzförmige Blende umfasst und im Strahlengang des Röntgen-Spektrometers vor oder hinter der Kollimator-Anordnung (5a; 5b) positioniert ist; und wobei die Detektor-Anordnung (7a; 7b) mindestens einen in einer Dimension ortsauflösenden Detektor enthält; **dadurch gekennzeichnet, dass** die Kollimator-Anordnung (5a; 5b; 5c; 5d; 5e) eine modifizierte Soller-Blende umfasst, bei welcher die Lamellen (15) eine Vielzahl von schlitzförmigen Durchgängen bilden, wobei aber zumindest bei einem Teil der von den Lamellen (15) gebildeten Schlitzen im Wesentlichen senkrecht zu den Schlitzen ausgerichtete Trennwände (25) vorhanden sind, die für Röntgen-Strahlung undurchlässig sind und die Querdivergenz der durch die Kollimator-Anordnung (5a; 5b; 5c; 5d; 5e) hindurchtretenden Röntgen-Strahlung (5') in einer Richtung quer zur Beugungsebene der von der Probe (2) kommenden Röntgen-Strahlung (3) einschränken.

2. Röntgen-Spektrometer nach Anspruch 1, **dadurch gekennzeichnet, dass** die Probe (2) um eine Achse senkrecht zu ihrer Oberfläche rotierbar im Röntgen-Spektrometer (10) gelagert ist.

3. Röntgen-Spektrometer nach Anspruch 1 oder 2, **dadurch gekennzeichnet, dass** der mindestens in einer Dimension ortsauflösende Detektor der Detektor-Anordnung (7a; 7b) als Streifen-Detektor ausgeführt ist, und dass die Streifen des Streifen-Detektors senkrecht zu den Schlitzen der modifizierten Soller-Blende ausgerichtet sind.

4. Röntgen-Spektrometer nach einem der vorhergehenden Ansprüche , **dadurch gekennzeichnet, dass** in der modifizierten Soller-Blende der Kollimator-Anordnung (5a) Trennwände (25) lediglich zwischen dem von zwei benachbarten Lamellen (15) gebildeten Schlitz, welcher dem Schlitz der Blenden-Anordnung (4) gegenüberliegt, vorhanden sind.

5. Röntgen-Spektrometer nach einem der Ansprüche 1 bis 3, **dadurch gekennzeichnet, dass** in der modifizierten Soller-Blende der Kollimator-Anordnung (5b) Trennwände (25) lediglich in den beiden Schlitzen der drei mittleren benachbarten Lamellen (15) vorhanden sind, wobei die mittlere dieser drei Lamellen (15) der Mitte des Schlitzes der Blenden-Anordnung (4) gegenüberliegt.

6. Röntgen-Spektrometer nach der Ansprüche 1 bis 3, **dadurch gekennzeichnet, dass** in der modifizierten Soller-Blende der Kollimator-Anordnung (5c) Trennwände (25) zwischen allen der von benachbarten Lamellen (15) gebildeten Schlitzen vorhanden sind.

7. Röntgen-Spektrometer nach einem der vorhergehenden Ansprüche, **dadurch gekennzeichnet, dass** die Detektor-Anordnung (7a; 7b) einen in einer Dimension ortsauflösenden, segmentierten Streifen-Detektor (7a) oder zwei direkt übereinander angeordnete, jeweils in einer Dimension ortsauflösende Streifen-Detektoren (7b) enthält.

8. Röntgen-Spektrometer nach einem der vorhergehenden Ansprüche, **dadurch gekennzeichnet, dass** die schlitzförmige Blende der Blenden-Anordnung (4) senkrecht zum lokalen Strahlengang sowie senkrecht zu ihrer Schlitzrichtung kontinuierlich oder stufenweise bewegbar gelagert ist.

9. Röntgen-Spektrometer nach einem der der vorhergehenden Ansprüche, **dadurch gekennzeichnet, dass** die Probe (2) in der Ebene ihrer Oberfläche kreisförmig ist und im Strahlengang des Röntgen-Spektrometers (10) zwischen der Probe (2) und der schlitzförmigen Blende der Blenden-Anordnung (4) oder zwischen der schlitzförmigen Blende der Blenden-Anordnung (4) und der modifizierten Soller-Blende der Kollimator-Anordnung (5a; 5b; 5c; 5d; 5e) eine feste weitere Blende, insbesondere mit elliptischem Blendendurchlass, positioniert ist, welche das Sichtfeld der Detektor-Anordnung (7a; 7b) so einschränkt, dass nur die Probe (2) selbst abgebildet wird.

10. Röntgen-Spektrometer nach einem der vorhergehenden Ansprüche, **dadurch gekennzeichnet, dass** die Abstände der Lamellen (15) so gewählt sind, dass die Divergenz des Röntgen-Strahls (5') nach der Kollimator-Anordnung (5a; 5b; 5c; 5d; 5e) in Beugungsrichtung im zentralen Abschnitt der modifizierten Soller-Blende gleich ist wie in der restlichen Kollimator-Anordnung (5a; 5b; 5c; 5d; 5e).

11. Röntgen-Spektrometer nach einem der vorhergehenden Ansprüche, **dadurch gekennzeichnet, dass** zumindest ein Teil der Trennwände (25) der modifizierten Soller-Blende der Kollimator-Anordnung (5d; 5e) in Richtung des lokalen Strahlengangs segmentiert aufgebaut ist.

12. Röntgen-Spektrometer nach Anspruch 11 **dadurch gekennzeichnet, dass** die einzelnen Segmente der Trennwände (25) jeweils eine Länge x sowie einen Abstand z zu den unmittelbar benachbarten Segmenten aufweisen, und dass das Verhältnis x/z so gewählt ist, dass keine Sichtlinie durch den jeweiligen Soller-Schlitz zwischen jeweils benachbarten von den Trennwänden (25) gebildeten Röhren exisitiert.

13. Röntgenspektrometer nach einem der vorhergehenden Ansprüche, **dadurch gekennzeichnet, dass** die Lamellen (15) und die Trennwände (25) der modifizierten Soller-Blende mittels 3D-Druck des zentralen Abschnitts der Kollimator-Anordnung (5a; 5b; 5c; 5d; 5e) hergestellt sind, insbesondere aus Wolfram-haltigem Material.

14. Röntgenspektrometer nach Anspruch 13, **dadurch gekennzeichnet, dass** die Querschnitte der von jeweils benachbarten Trennwänden (25) und Lamellen (15) gebildeten Röhren so gewählt sind, dass in der Projektion auf die Oberfläche der Probe (2) ein symmetrischer Fleck sichtbar wird, insbesondere dass die Querschnitte elliptisch gewählt sind und der Fleck kreisförmig wird.

## Claims

1. An X-ray spectrometer (10) comprising an X-ray source (20), from which X-ray radiation (1) is passed onto a sample (2) to be examined and having a surface on which the X-ray radiation (1) from the X-ray source (20) impinges, comprising a diaphragm arrangement (4), through which X-ray radiation (3) diffracted or scattered at the surface of the sample (2) or emitted by the sample (2) can pass, comprising a collimator arrangement (5a; 5b; 5c; 5d; 5e) having a multiplicity of mutually parallel lamellae (15), comprising an analyzer arrangement (6), at which part of the X-ray radiation (5`) that has passed through the collimator arrangement (5a; 5b; 5c; 5d; 5e) is reflected whilst complying with the Bragg condition, and comprising a detector arrangement (7a; 7b) for receiving and detecting X-ray radiation (6') reflected at the analyzer arrangement (6),
wherein the diaphragm arrangement (4) comprises a slit-shaped diaphragm and is positioned in the beam path of the X-ray spectrometer upstream or downstream of the collimator arrangement (5a; 5b), and wherein the detector arrangement (7a; 7b) comprises at least one detector that is spatially resolving in one dimension,
**characterized in that**
the collimator arrangement (5a; 5b; 5c; 5d; 5e) comprises a modified Soller diaphragm, in which the lamellae (15) form a multiplicity of slit-shaped passages, but in which case, at least for a portion of the slits formed by the lamellae (15), partitions (25) aligned substantially perpendicularly to the slits are present, which partitions are non-transmissive to X-ray radiation and restrict the transverse divergence of the X-ray radiation (5`) passing through the collimator arrangement (5a; 5b; 5c; 5d; 5e) in a direction transversely with respect to the diffraction plane of the X-ray radiation (3) coming from the sample (2).

2. The X-ray spectrometer as claimed in claim 1, **characterized in that** the sample (2) is mounted in the X-ray spectrometer (10) rotatably about an axis perpendicular to the surface of said sample.

3. The X-ray spectrometer as claimed in claim 1 or 2, **characterized in that** the detector of the detector arrangement (7a; 7b) that is spatially resolving at least in one dimension is embodied as a strip detector, and that the strips of the strip detector are aligned perpendicularly to the slits of the modified Soller diaphragm.

4. The X-ray spectrometer as claimed in any of the preceding claims, **characterized in that** in the modified Soller diaphragm of the collimator arrangement (5a) partitions (25) are present only between the slit which is formed by two adjacent lamellae (15) and which is situated opposite the slit of the diaphragm arrangement (4).

5. The X-ray spectrometer as claimed in any of claims 1 to 3, **characterized in that** in the modified Soller diaphragm of the collimator arrangement (5b) partitions (25) are present only in the two slits of the three central adjacent lamellae (15), wherein the central one of said three lamellae (15) is situated opposite the center of the slit of the diaphragm arrangement (4).

6. The X-ray spectrometer as claimed in claims 1 to 3, **characterized in that** in the modified Soller diaphragm of the collimator arrangement (5c) partitions (25) are present between all the slits formed by adjacent lamellae (15).

7. The X-ray spectrometer as claimed in any of the preceding claims, **characterized in that** the detector arrangement (7a; 7b) contains a segmented strip detector (7a) that is spatially resolving in one dimension, or two strip detectors (7b) that are arranged one directly above the other and are each spatially resolving in one dimension.

8. The X-ray spectrometer as claimed in any of the preceding claims, **characterized in that** the slit-shaped diaphragm of the diaphragm arrangement (4) is mounted movably in steps or continuously perpendicularly to the local beam path and perpendicularly to its slit direction.

9. The X-ray spectrometer as claimed in any of the preceding claims, **characterized in that** the sample (2) is circular in the plane of its surface and in the beam path of the X-ray spectrometer (10) between the sample (2) and the slit-shaped diaphragm of the diaphragm arrangement (4) or between the slit-shaped diaphragm of the diaphragm arrangement (4) and the modified Soller diaphragm of the collimator arrangement (5a; 5b; 5c; 5d; 5e) there is positioned a fixed further diaphragm, in particular having an elliptical diaphragm passage, which restricts the field of view of the detector arrangement (7a; 7b) such that only the sample (2) itself is imaged.

10. The X-ray spectrometer as claimed in any of the preceding claims, **characterized in that** the distances between the lamellae (15) are chosen such that the divergence of the X-ray beam (5`) downstream of the collimator arrangement (5a; 5b; 5c; 5d; 5e) in the diffraction direction in the central section of the modified Soller diaphragm is the same as in the rest of the collimator arrangement (5a; 5b; 5c; 5d; 5e).

11. The X-ray spectrometer as claimed in any of the preceding claims, **characterized in that** at least one portion of the partitions (25) of the modified Soller diaphragm of the collimator arrangement (5d; 5e) is constructed in segmented fashion in the direction of the local beam path.

12. The X-ray spectrometer as claimed in claim 11, **characterized in that** the individual segments of the partitions (25) in each case have a length x and a distance z from the directly adjacent segments, and that the ratio x/z is chosen such that no line of sight exists through the respective Soller diaphragm between respectively adjacent tubes formed by the partitions (25).

13. The X-ray spectrometer as claimed in any of the preceding claims, **characterized in that** the lamellae (15) and the partitions (25) of the modified Soller diaphragm are produced by means of 3D printing of the central section of the collimator arrangement (5a; 5b; 5c; 5d; 5e), in particular from tungsten-containing material.

14. The X-ray spectrometer as claimed in claim 13, **characterized in that** the cross sections of the tubes formed by respectively adjacent partitions (25) and lamellae (15) are chosen such that a symmetrical spot becomes visible in the projection onto the surface of the sample (2), in particular wherein the cross sections are chosen to be elliptical and the spot becomes circular.

## Revendications

1. Spectromètre à rayons X (10) comprenant une source de rayons X (20) à partir de laquelle les rayons X (1) sont guidés sur un échantillon (2) à examiner qui comporte une surface à laquelle les rayons X (1) provenant de la source de rayons X (20) sont incidents, un ensemble formant diaphragme (4) que peuvent traverser les rayons X (3) qui sont diffractés ou diffusés sur la surface de l'échantillon (2) ou émis par l'échantillon (2), un ensemble formant collimateur (5a ; 5b ; 5c ; 5d ; 5e) qui comporte un grand nombre de lamelles (15) parallèles entre elles, un ensemble formant analyseur (6), sur lequel une partie des rayons X (5'), qui sont parvenus par le biais de l'ensemble formant collimateur (5a ; 5b ; 5c ; 5d ; 5e), sont réfléchis conformément à la condition de Bragg, et un ensemble formant détecteur (7a ; 7b) destiné à recevoir et détecter les rayons X réfléchis (6') sur l'ensemble formant analyseur (6), l'ensemble formant diaphragme (4) comprenant un diaphragme en forme de fente et étant positionné devant ou derrière l'ensemble formant collimateur (5a ; 5b) dans le trajet de rayons du spectromètre à rayons X ; et l'ensemble formant détecteur (7a ; 7b) contenant au moins un détecteur à résolution spatiale dans une dimension ; **caractérisé en ce que**
l'ensemble formant collimateur (5a ; 5b ; 5c ; 5d ; 5e) comprend un diaphragme de Soller modifié dans lequel les lamelles (15) forment un grand nombre de passages en forme de fente, des parois de séparation (25) qui sont orientées sensiblement perpendiculairement aux fentes étant cependant prévues au moins dans une partie des fentes formées par les lamelles (15), lesquelles parois de séparation (25) sont imperméables aux rayons X et limitent la divergence transversale des rayons X (5') traversant l'ensemble formant collimateur (5a ; 5b ; 5c ; 5d ; 5e) dans une direction transversale au plan de diffraction des rayons X (3) provenant de l'échantillon (2) .

2. Spectromètre à rayons X selon la revendication 1, **caractérisé en ce que** l'échantillon (2) est monté dans le spectromètre à rayons X (10) de manière à pouvoir tourner sur un axe perpendiculaire à la surface dudit échantillon.

3. Spectromètre à rayons X selon la revendication 1 ou 2, **caractérisé en ce que** le détecteur, à résolution spatiale dans au moins une dimension, de l'ensemble formant détecteur (7a ; 7b) est conçu comme un détecteur de bande et **en ce que** les bandes du détecteur de bande sont orientées perpendiculairement aux fentes du diaphragme de Soller modifié.

4. Spectromètre à rayons X selon l'une des revendications précédentes, **caractérisé en ce que**, dans le diaphragme de Soller modifié de l'ensemble formant collimateur (5a), des parois de séparation (25) sont prévues uniquement dans la fente formée de deux lamelles adjacentes (15) et située en face de la fente de l'ensemble formant diaphragme (4).

5. Spectromètre à rayons X selon l'une des revendications 1 à 3, **caractérisé en ce que**, dans le diaphragme de Soller modifié de l'ensemble formant collimateur (5b), des parois de séparation (25) sont prévues uniquement dans les deux fentes des trois lamelles médianes adjacentes (15), celle des trois lamelles (15) qui est médiane étant située en face du milieu de la fente de l'ensemble formant diaphragme (4).

6. Spectromètre à rayons X selon les revendications 1 à 3, **caractérisé en ce que**, dans le diaphragme de Soller modifié de l'ensemble formant collimateur (5c), des parois de séparation (25) sont prévues entre toutes les fentes formées par des lamelles adjacentes (15).

7. Spectromètre à rayons X selon l'une des revendications précédentes, **caractérisé en ce que** l'ensemble formant détecteur (7a ; 7b) contient un détecteur à bande segmentée (7a) à résolution spatiale dans une dimension ou deux détecteurs à bande (7b) à résolution spatiale dans une dimension disposés directement l'un au-dessus de l'autre.

8. Spectromètre à rayons X selon l'une des revendications précédentes, **caractérisé en ce que** le diaphragme en forme de fente de l'ensemble formant diaphragme (4) est monté de manière à être mobile en continu ou pas à pas perpendiculairement au trajet de rayons local et perpendiculairement à sa direction de fente.

9. Spectromètre à rayons X selon l'une des revendications précédentes, **caractérisé en ce que** l'échantillon (2) est circulaire dans le plan de sa surface et un autre diaphragme fixe, pourvu en particulier d'un passage de diaphragme elliptique, qui limite le champ de vision de l'ensemble formant détecteur (7a ; 7b) de sorte que seul l'échantillon (2) lui-même est reproduit, est positionné dans le trajet de rayons du spectromètre à rayons X (10) entre l'échantillon (2) et le diaphragme en forme de fente de l'ensemble formant diaphragme (4) ou entre le diaphragme en forme de fente de l'ensemble formant diaphragme (4) et le diaphragme de Soller modifié de l'ensemble formant collimateur (5a ; 5b ; 5c ; 5d ; 5e).

10. Spectromètre à rayons X selon l'une des revendications précédentes, **caractérisé en ce que** les distances entre les lamelles (15) sont choisies de sorte que la divergence des rayons X (5') après l'ensemble formant collimateur (5a ; 5b ; 5c ; 5d ; 5e) dans la direction de diffraction dans la portion centrale du diaphragme de Soller modifié soit la même que dans le reste de l'ensemble formant collimateur (5a ; 5b ; 5c ; 5d ; 5e).

11. Spectromètre à rayons X selon l'une des revendications précédentes, **caractérisé en ce qu'**au moins une partie des parois de séparation (25) du diaphragme de Soller modifié de l'ensemble formant collimateur (5d ; 5e) est segmentée dans la direction du trajet de rayons local.

12. Spectromètre à rayons X selon la revendication 11, **caractérisé en ce que** les segments individuels des parois de séparation (25) ont chacun une longueur x et une distance z par rapport aux segments immédiatement adjacents, et **en ce que** le rapport x/z est choisi de manière à ce qu'aucune ligne de vision à travers la fente de Soller respective n'existe entre des tubes adjacents respectifs formés par les parois de séparation (25).

13. Spectromètre à rayons X selon l'une des revendications précédentes, **caractérisé en ce que** les lamelles (15) et les parois de séparation (25) du diaphragme de Soller modifié sont réalisées par impression 3D de la portion centrale de l'ensemble formant collimateur (5a ; 5b ; 5c ; 5d ; 5e), notamment à partir de matériau contenant du tungstène.

14. Spectromètre à rayons X selon la revendication 13, **caractérisé en ce que** les sections transversales des tubes formés par des parois de séparation (25) et des lamelles (15) adjacentes sont choisies de sorte qu'une tache symétrique devienne visible en projection sur la surface de l'échantillon (2), notamment **en ce que** les sections sont choisies pour être elliptiques et la tache devient circulaire.
